# EUROPEAN PATENT APPLICATION

(11) **EP 4 841 899 A1**
(43) Date of publication of application: **18.11.2026**
(21) Application number: 26178434.2
(22) Date of filing: 13.05.2026
(51) Int. Cl.: H04B 3/54

(54) **COMMUNICATING OVER A POWER LINE BY ADJUSTING IMPEDANCE**

(30) Priority: 15.05.2025 US 202563806215 P; 26.09.2025 US 202563888796 P
(71) Applicant: Eaton Intelligent Power Limited, Dublin D04 Y0C2 (IE)
(72) Inventor: GUCKIN, Mark, Middletown (US)
(74) Representative: Schwan Schorer & Partner mbB

(57) **Abstract**

A circuit and system for conveying information over a power line are disclosed. A circuit includes an impedance adjustor configured to selectively change an impedance of the circuit during one or more cycles of an alternating current power signal, causing detectable voltage variations on the power line corresponding to a conveyed message. The circuit may detect changes in power signal frequency or current amplitude and transmit information in response thereto, including operational state or stored performance data. Different frequencies or current amplitudes may correspond to interrogation commands or diagnostic modes. A detection system includes a power source, a voltage detector configured to detect the voltage variations, and a controller configured to determine a message based on the detected variations. In some embodiments, the circuit is implemented in an airfield lighting fixture.

## Description

### CROSS-REFERENCE TO RELATED APPLICATIONS

This application claims the benefit of US Provisional Application No. 63/806,215, filed on May 15, 2025 and US Provisional Application No. 63/888, 796 filed on September 26, 2025, the disclosures of which are hereby incorporated by reference in their entireties.

### BACKGROUND

A number of systems exist that receive power from a system with which at least rudimentary communications are desirable. For example, airfield lighting fixtures receive power for operations under at least partial control of an airport lighting and monitoring system and communications between airfield lighting fixtures and other components of an airport lighting and monitoring system is desirable. Airfield lighting fixtures include runway and taxi way lights that form pathways to guide planes as they travel at night. Per FAA standards (e.g., Advisory Circular AC 150/5345-56), an airport lighting control and monitoring system (ALCMS) communicates directly with the airfield lighting fixtures, allowing the airport lighting control and monitoring system to set an illumination level of the airfield lighting fixtures. Monitoring signals generally allow the airfield lighting fixtures to inform the airport lighting control and monitoring system whenever operational issues exist.

The prevalent conventional communications between the airport lighting control and monitoring system and the airfield lighting fixtures use a Power Line Carrier Communication (PLCC) mechanism, which uses specialized modems to convert data into transmitted signals along power lines, typically at a frequency range much higher than the power line frequency. Airfield PLCC suffers from attenuation over the long distance of the power line airfield lighting circuit. When the signal attenuation is too great, repeaters much be added to boost the signal. PLCC hardware is costly to maintain and install.

### BRIEF SUMMARY

A circuit, device, and/or method for communicating over a power line by adjusting impedance is described. In certain embodiments, the circuit or device can be an airfield lighting fixture, although other powered circuits and devices are contemplated. Communication is achieved using messages encoded within power cycles provided to the circuit (e.g., airfield lighting fixture) from a remote system (e.g., ALCMS). Each message can communicate an operational state of one of the airfield lighting fixtures to the airport lighting control and monitoring system. Each airfield lighting fixture includes a circuit, which is able to adjust the fixture's impedance between at least a low impedance state and a high impedance state. An airfield lighting fixture changing between the different impedance states produces different voltage states, which are detectable by the ALCMS. By synchronizing changes in impedance states to power cycles, each airfield lighting fixture can encode messages to communicate with the airfield lighting and monitoring system. In certain embodiments, the airfield lighting and monitoring system can encode messages to airfield lighting fixtures with frequency shifts or current amplitude adjustments of the power, which the airfield lighting fixtures can detect. Accordingly, bidirectional communications are enabled over the power loop between the airport lighting control and monitoring system and airfield lighting fixtures.

In some aspects, a circuit communicates with a remote system using changes of impedance. The circuit includes: a power port configured to receive power from a remote system, said power having a sequence of power cycles; an impedance adjustor connected to the power port including impedance circuitry to adjust between a low impedance state and a high impedance state; and a processor connected to the impedance adjustor executing instructions to: convey a message by selectively changing between the low impedance state and the high impedance state; and convey a message to a remote system via the changes between the low impedance state and the high impedance state. The message can utilize any of a variety of signaling techniques. For instance, the message can represent conveying a change of impedance state within one or more power cycles to indicate a YES response and conveying a change in impedance state within a different power cycle to indicate a NO response. Typically, the detection of 1-bit of information will take eight to ten (8-10) power full-cycles (e.g., 0.13 to 0.167 seconds) to reliably transmit/receive signals. In certain embodiments, half cycles can be used, which can cut the 1-bit time in half.

In another example, impedance state changes can represent different bit values, where the message is a bit encoded sequence. In certain embodiments, the circuit can be that of an airfield lighting fixture.

In some aspects, the circuit of an airfield lighting fixture includes: a light emitter receiving external power, said power having a sequence of power cycles. The ALCMS controls and monitors the airfield lighting fixture, where a constant current regulator (CCR) is the source of the external power, which can include power transmitted at different frequencies or current amplitudes. The circuit further includes: an impedance adjustor including circuitry to adjust between a low impedance state and a high impedance state; and a processor connected to the impedance adjustor configured to execute instructions to: convey a message to the ACLMS over the loop by encoding the message within a sequence of bits, each having a bit value of zero or one, wherein different bit values are represented by the low impedance state and the high impedance state.

In some aspects, changes are made to the ACLMS to enable a decoding of impedance encoded messages from airfield lighting fixtures. Typically, the ALCMS piggybacks onto the Airfield lighting circuit consisting of a power generator (CCR) cable, isolation transformers, light fixtures. An ALCMS adds computer, software, communication to power generator, modems, etc. Notably, ALCMS system can't exist without the Airfield lighting circuit. However, an Airfield lighting circuit can exist without an ALCMS. In certain embodiments, the smart CCR can directly transmit/receive information to/from the light fixture without the need for an ALCMS. This information may be transmitted to the ALCMS computer by a number of methods (e.g. RS232 cable, RS485 cable, Ethernet Cable, Wi-Fi radio, etc.).

A system for detecting information conveyed over a power line includes: a power generator configured to generate power having a sequence of power cycles, wherein the power is conveyed over a loop connecting the airport lighting control and monitoring system to the airfield lighting fixture; a voltage detector connected to the power generator, the voltage detector including circuitry to detect a change in voltage state on a per cycle basis for the power, wherein the voltage detector is of sufficient sensitivity to detect different voltage states resulting from the airfield lighting fixture changing from a low impedance state to a high impedance state; and a processor connected to the voltage detector executing instructions to: detect plurality of sets of different voltage states occurring within a set of the power cycles; and translate each set of the plurality of sets of different voltage states into a bit value such that the plurality of the sets of different voltage states corresponds to a sequence of bits, wherein the sequence of bits represent a message conveyed from the airfield lighting fixture to the airport light control and monitoring system over the loop, wherein for each bit of the sequence of bits, a zero bit value and a one bit value correspond to different voltage values detected by the voltage detector, wherein the different voltage values correspond to the airfield lighting fixture being in the low impedance state and being in the high impedance state.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

FIG. 1A shows a schematic diagram of a circuit using an impedance adjustor to communicate with a remote system.
FIG. 1B illustrates an impedance adjustor having a resistor as part of the impedance circuitry.
FIG. 1C illustrates an impedance adjustor having a capacitor as part of the impedance circuitry.
FIG. 1D is a schematic diagram of a circuit using an encoder to encode a message sent via impedance changes, which circuit can also decode changes in frequency or amplitude.
FIG. 1E is a schematic diagram of a system 10 using a decoder to decode a message sent via impedance changes.
FIG. 1F shows a use case for a circuit consistent with the arrangements and descriptions of FIG. 1A-1E.
FIG. 1G shows a multifrequency signaling timing diagram consistent with the use case of FIG. 1F.
FIG. 2A shows the set-up of a proof of concept for current amplitude-based interrogations.
FIG. 2B illustrates a sequence of commands output from the CCR during the proof of concept.
FIG. 2C illustrates an example correspondence between interrogations and responses.
FIGs. 3A-3D illustrate the demonstration of proof of concept showing the traces and resulting indicator lights as the four light fixtures are interrogated one at a time, serially.
FIG. 4 illustrates a serial circuit permitting signaling between a set of airfield lighting fixtures and airport lighting control and monitoring system via the loop through the airfield lighting fixtures changing impedance states.
FIG. 5 illustrates a serial circuit permitting signaling between a set of airfield lighting fixtures.

### DETAILED DESCRIPTION

A circuit, device, and/or method for communicating over a power line by adjusting impedance is described. In certain embodiments, the circuit or device can be an airfield lighting fixture, although other powered circuits and devices are contemplated.

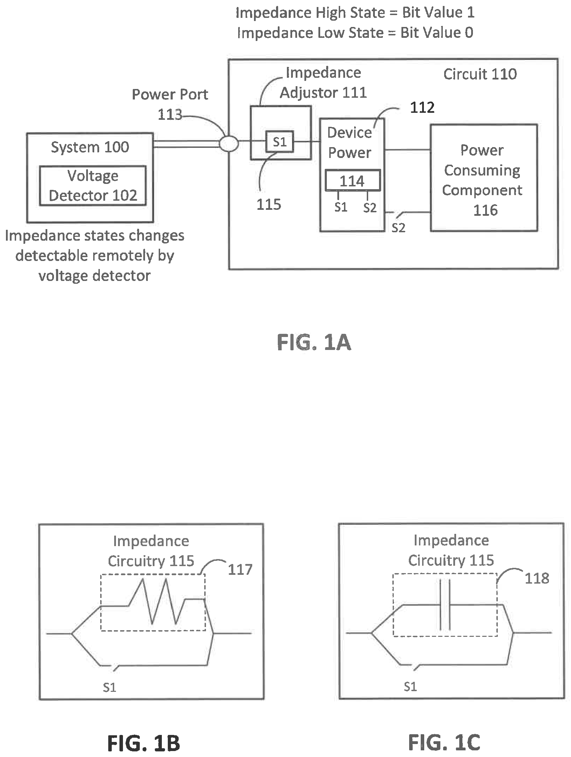

FIG. 1A shows a schematic diagram of a circuit 110 using an impedance adjustor 111 to communicate with a remote system 100. The circuit 110 receives alternating current power from system via a power port 113. The remote system 100 can send a sequence of power cycles. In embodiments, frequency encoded messages, currently amplitude encoded messages, and/or information can be conveyed from the system to the circuit 110. The circuit 110 can operate on power provided via device power 112 or by AC power received via power port 113. Impedance adjustor 111 operating in conjunction with the processor 114 is able to communicate back to the system 100 by the impedance adjustor 111 selecting the low or high impedance state. The remote system 100 includes a voltage detector 102 which can measure changes in loop voltage that includes circuit 110. The voltage detector 102 is of sufficient sensitivity to detect the resultant loop voltage associated with the high or low impedance adjustor state. Thus, the impedance state changes are remotely detectable by the voltage detector 102 as variations in voltage on the power line.

A high impedance state can represent a binary "1", a "YES", or some other value. A low impedance state can represent a binary "0", a "NO, or some other value.

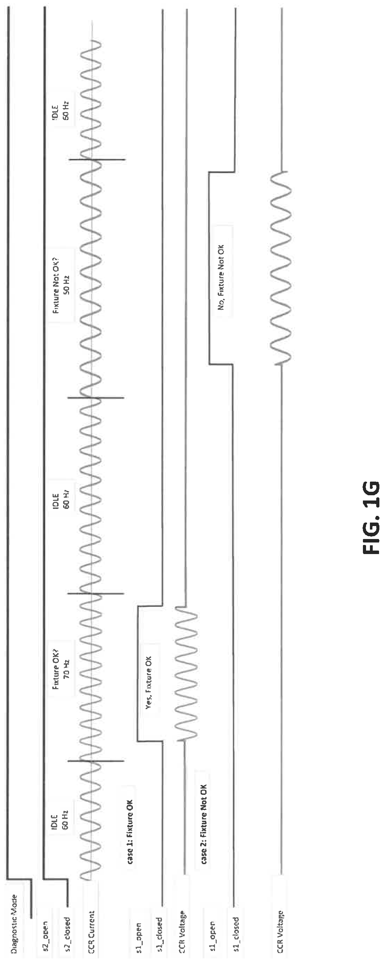

In some embodiments (see FIG. 1G), a high impedance state of the impedance adjuster 111 coupled with 70Hz power line frequency may be used to represent a binary "1" or "Yes". Similarly, (see FIG. 1G), a high impedance state coupled with a 50Hz power line frequency may be used to represent a binary "0" or "No". A low impedance state as used herein may be considered to be an "idle state", a "non-message state", or a "normal operation state." Appreciatively, if the circuit 110 lacks an "idle state" and a low impedance is used to indicate a binary "0", there may be no means for remote system 100 (e.g., an ALCMS or CCR) to know if circuit 110 (e.g., a fixture) is activity responding.

In a more specific example with reference to FIG. 1G, "fixture OK" in that instance is a two-bit string such that (high impedance, 70Hz) and (low impedance, 50Hz = logical bit string (1,0). "Fixture not-OK" equals a two bit string (low impedance, 70Hz) and (high impedance, 50Hz), which is equal to a logical bit string (0,1). In FIG. 1G, logical bit strings (1,1) and (0,0) are not valid as they indicate a possible issue with the fixture and/or adjustor when in such a messaging state. Per FIG. 1G, the 60Hz idle state may be used as a delay between 70Hz and 50Hz signaling to accommodate fixture circuitry needs (e.g., noise filtering time constants), if necessary.

In a very simple case where a high impedance response indicates the circuit 110 is "OK" and a low impedance response indicates the circuit 110 is not OK, an "idle state" may not be necessary. Since zero volts generally indicates a device (or circuit 110) is offline (see RS-432 and RS-485 protocols as examples) use of an "idle state" as described can be beneficial. In certain embodiments, from a messaging standpoint, low impedance can be defined as offline when coupled with a powerline frequency of 60 Hz.

Any set of messages from a rudimentary yes/no to an encoding of complex messages within a sequence of one or more bits is possible. That is, within the sequence (e.g., the bit sequence) different symbols correspond to different ones of the low impedance state and the high impedance state. Adjustments for the bit sequence are made with respect toto the set of power cycles of AC power received via the power port 113. In some embodiments, the system 100 communicates with the circuit 110 through frequency or amplitude encoding, which changes characteristics of the power received via the power port 113. In certain embodiments, the detection of 1-bit of information will take eight to ten (8-10) power full-cycles (e.g., 0.13 to 0.167 seconds) to reliably transmit/receive signals. In certain embodiments, half cycles can be used, which can cut the 1-bit time in half. A number of power cycles needed will vary depending on use case.

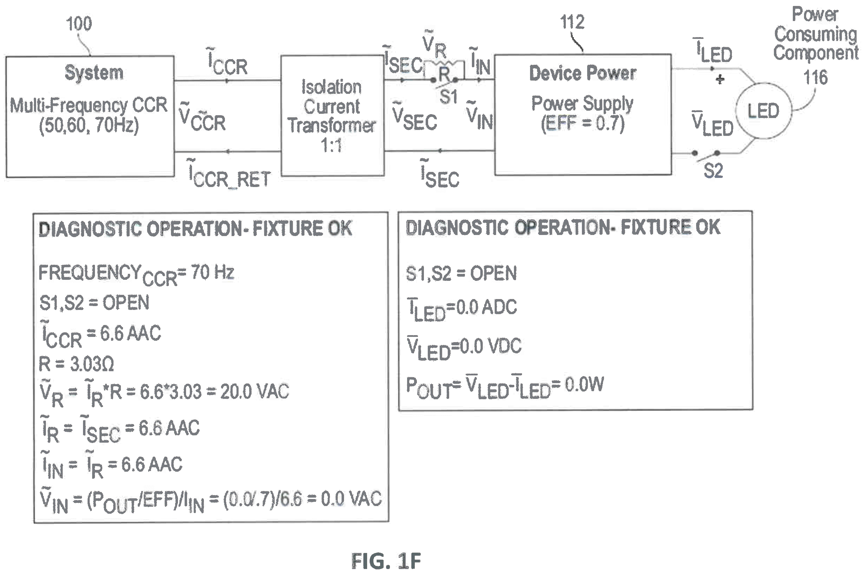

In other embodiments, power received at power port 113 is frequency shifted from a default frequency to another frequency to interrogate the circuit. A change in impedance state during an upwardly shifted frequency period can indicate a positive response. A change in impedance state during a downward shifted frequency period can indicate a negative response (see FIG. 1F and 1G).

In some embodiments, frequency is shifted by the power generator (CCR) from a default frequency (e.g. 60Hz) to another previously agreed upon frequency (e.g. 70Hz or 50Hz) to interrogate the circuit 110. The circuit 110 may respond with a high input impedance state during the upward frequency shift interrogation by the power generator to indicate a positive response. Likewise the circuit 110 may change its input impedance to a high state during a lower frequency shift interrogation by the power generator to indicate a negative response.

The circuit 110 and impedance-based communications described herein are not limited to any specific signaling protocol so long as a message, signal, or other communication is able to be conveyed. In still other embodiments, amplitude-based interrogations can be used in place of a frequency-based approach.

For example, in some embodiments, power received at power port 113 is amplitude adjusted from a default current amplitude to another current amplitude to interrogate the circuit. A change in impedance state during an upwardly adjusted current amplitude period can indicate a positive response or convey a message. A change in impedance state during a downward adjusted current amplitude period can indicate a negative response or convey a message.

For example, for current amplitude-based interrogations in diagnostic mode, a default current amplitude may be approximately 5.2 Amps or 5.5 Amps, a high current state may be approximately 6.6 Amps, and a low current state may be approximately 4.8 Amps. The low and high current states can be transformed with the impedance adjustor to produce low and high voltages that are detected by the airfield lighting and remote system 100 (e.g., by the CCR). Thus, current amplitude can be adjusted by the power generator (CCR) from a default current amplitude to another amplitude to interrogate the circuit 110 and the circuit 110 may respond with a high input impedance state or a low input impedance state indicating the response to the interrogation.

As an illustrative example of current amplitude-based interrogations, a remote system (e.g., CCR) command scenario involves signaling with four current amplitudes: one for diagnostic mode signaling (e.g., to indicate to the devices that they should enter diagnostic mode), one for requesting a positive response (e.g., is device ON), one for requesting a negative response (e.g., is device OFF), and one for idle (e.g., useful between interrogations). In some cases, another signal can be used to indicate end of diagnostic mode (using a same or different value as the diagnostic mode signaling). The diagnostic mode signaling indicates to the light fixtures that interrogations will be occurring and to enter diagnostic mode. The lighting fixtures can detect the current amplitude and respond back by changing the series circuit voltage (e.g., using a change of resistance). In the diagnostic mode, fixtures can respond in series, a next fixture waiting an appropriate number of cycles and/or other programmatic mechanism before checking and responding. For example, the fixtures can be numbered and coordinated in a manner that allows for the fixtures to respond to commands from the CCR for status, one at a time serially.

In the current amplitude-based interrogations, in some cases, power can be transmitted at a current amplitude of between 2 Amps and 7 Amps. For example, power can be transmitted at a current amplitude corresponding to predefined current levels including two or more of approximately 2.8 A, 3.4 A, 4.1 A, 5.2 A, and 6.6 A for different states.

One use case is for system 100 to be an airfield lighting and monitoring system (ALCMS) and for the circuit 110 to be an airfield lighting fixture. Other implementations can utilize different types of remotely monitored circuits or devices connected over a power line. Additionally, other use cases are possible and the disclosure is not limited in this regard. It should also be noted that while a single circuit/fixture is shown and described for simplicity, a plurality of circuits/fixtures are on a same power supply line and can operate as described with respect to the circuit 110.

As shown, the impedance adjustor 111 includes impedance circuitry 115 which can include a switch referred to as switch S1. Switch S1 can be in at least an open or closed position. Opening and closing S1 will cause power received via the power port 113 to pass through the impedance circuitry 115 in a manner that effectuates the change between the high and low impedance states.

Accordingly, S1 can be a switch connected to an impedance element, such that when the switch is open the impedance adjustor 111 is in either the high impedance state or the low impedance state. When the switch S1 is closed, the impedance adjustor 111 is in an opposing one of the high impedance state or the low impedance state when compared with the switch S1 open case.

Circuit 110 also may include a second switch referred to as S2, which enables or disables power to flow from the device power 112 to a power consuming component 116, such as a light emitter of an airfield lighting fixture. Because multiple circuits or fixtures can be connected to the loop over which system 100 provides power, clean signaling may require circuits/devices/fixtures in the loop to open S2 when not communicating with system 100 to prevent interference.

Processor 114 is a microprocessor that controls a state of impedance adjustor 111 to effectuate communications. In various embodiments, this can be performed via timing (based on a power cycle) and changes in switches S1 and S2 (See FIG. 1F and 1G).

The impedance circuitry 115 can be constructed using various impedance elements, such as using one or more resistors (see FIG. 1B) or one or more capacitors (see FIG. 1C). That is, FIG. 1B illustrates an impedance adjustor 111 having a resistor 117 as part of the impedance circuitry 115. FIG. 1C illustrates an impedance adjustor 111 having a capacitor 118 as part of the impedance circuitry 115. Timing of S1 opening/closing within the impedance circuitry 115 relative to the power cycle of power received via power port 113 and when a reading is taken from voltage detector 102 can be significant. For example, voltage change as read by voltage detector 102 while a capacitor 118 is charging will be different from a voltage reading when the capacitor 118 is fully charged. Selection of an impedance element, whether resistive or capacitor based, depends upon the sensitivity of the voltage detector 102, the power port (e.g. isolation transformer) gain, and the power line characteristics (e.g. frequency, voltage, current).

Embodiments are contemplated for impedance circuitry 115 including electronic elements other than what is illustrated in FIG. 1B and 1C. In some embodiments, impedance circuitry can utilize an inductor or a combination of resistor, capacitor and inductor (represented by Z(f) where f is the powerline frequency).

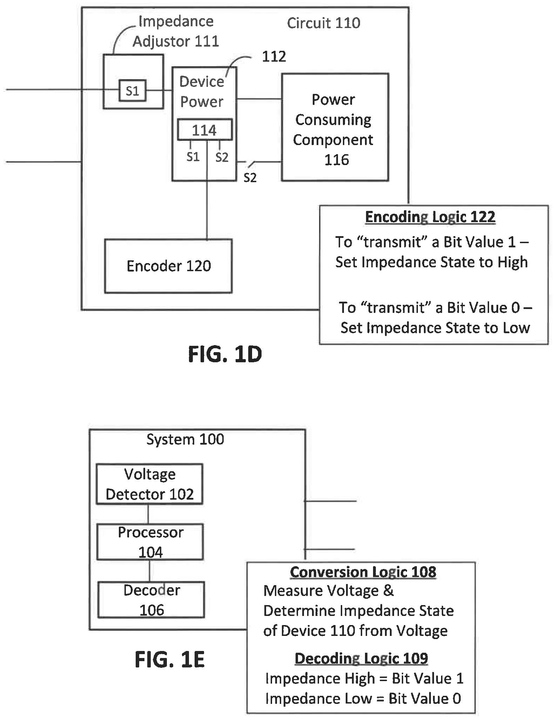

FIG. 1D is a schematic diagram of a circuit 110 using an encoder 120 to encode a message sent via impedance changes, which circuit 110 can also decode changes in frequency or amplitude. Encoder 120 may be implemented by processor circuitry available as part of circuit 110 (e.g., as part of processor 114). In some embodiments, a rudimentary Yes/No or 1/0 signal is sent. In some embodiments, a sequence of bits providing a more elaborate message may be sent. A signal may need to be repeated over multiple power cycles to reliably transmitted/received depending on use case. In certain embodiments, such as ACLMS ones, the detection of 1-bit of information will take eight to ten (8-10) power full-cycles (e.g., 0.13 to 0.167 seconds) to reliably transmit/receive signals. In certain embodiments, half cycles can be used, which can cut the 1-bit time in half. A number of power cycles needed will vary depending on use case.

In certain embodiments, the circuit 110 itself is preconfigured for a set of diagnostic codes. For example, airfield lighting fixtures could have 455 pre-established codes. These codes can be used by encoder 120. For example, assuming some of the available pre-established codes are unused, a new definition and meaning consistent with monitoring activities can be established. In other embodiments when preestablished codes are used for communications, existing codes can be overloaded to have new meanings when the circuit 110 is placed in various diagnostic states.

At a basic level, the encoder 120 includes encoding logic 122, which may be in the form of instructions or hardware, to transmit via a set of one or more power cycles a bit value 1 (or Yes) when the impedance state of the impedance circuitry 115 is set to high; and a bit value of 0 (or No) when the impedance state of the impedance circuitry 115 is set to low. The meaning of the various bits/impedance states can vary from implementation to implementation so long as a consistent schema is established.

In some embodiments, encoding logic can utilize a communication scheme that couples a unique power line frequency with a high impedance to indicate a logical "0" or "1". Low impedance can be used while in an idle state. In certain embodiments, a frequency detector can be included in the circuit 110. The frequency detector can detect what frequency is being sent from the system 100. Typically, one or two cycles of the line is needed to calculate the frequency. When the frequency is known by circuit 110, input impedance may be raised if the known frequency agrees with the state of the circuit 110 (e.g., OK or not OK).

For example, FIG. 1G demonstrates a contemplated signaling schema where frequency shifts trigger a response represented by an impedance state change, which is interpreted as a YES or OK when the response is conveyed during an ,(e.g., 70 Hz from a 60 Hz baseline) and a NO or NOT OK when the response is conveyed during a downward frequency shift (e.g., 50 Hz). Significantly, once a single bit is able to be conveyed from circuit 110 and understood/interpreted by system 100, an arbitrarily complex message can be conveyed as a sequence of bits regardless of the underlying schema used for interpretation. In some embodiments, the fixture circuit 110 must positively respond to one state or the other by raising its input impedance.

In a similar manner to that described with respect to the frequency shifting scheme, a current amplitude adjustment scheme can be implemented using CCR with multi-level current amplitude capabilities and, for the circuit 110 to include a current amplitude detector in circuit 110 that is connected to the processor 114. The current amplitude detector includes circuitry to detect a change in power line current amplitude received via the power port between at least two amplitude states. The processor can thus execute instructions to decode a message that was current amplitude encoded.

FIG. 1E is a schematic diagram of a system 100 using a decoder 106 to decode a received message sent via impedance changes. In some embodiments, a rudimentary Yes/No or 1/0 signal is received. Decoder 106 is configured to discern a meaning of messages/signals encoded by encoder 120. Decoder 106 can include conversion logic 108 that measures voltage variations on the power line and determines an impedance state of circuit 110 from the measured voltage. Timing can be involved, as when a capacitor 118 is charging. The decoder 106 also includes decoding logic 109 that translates an impedance high into a bit value of 1, Yes, or another signaling meaning. Decoding logic translates an impedance low into a bit value of 0, No, or another such meaning established in conjunction with encoder 120. In various embodiments, the system 100 can communicate to the circuit 110 via frequency, amplitude, or other encoding scheme, which a set of encoding/decoding component can translate. FIG. 1F shows a use case for a circuit 110 consistent with the arrangements and descriptions of FIG. 1A-1E. The arrangements of FIG. 1F illustrates components and values consistent with those found in an ALCMS and airfield lighting fixture. Specifics can vary depending on implementation specifics and underlying circuit/power configurations.

In FIG 1F, the remote system 100 can include a multifrequency constant current regulator (CCR) that operates around 60 hertz (Hz) in an operational mode. In a diagnostic mode, the multifrequency constant current regulator can also communicate at 50 Hz, 70 Hz, or the like. A number of power line cycles of 50, 60, or 70 Hz can trigger a response, as elaborated upon in FIG. 1G. A sending current for power, which is denoted I_{CCR} is conveyed and a return current is denoted as I_{CCR_RET}. Voltage of power provided is labeled V_{CCR}. Power can be conveyed across an isolation current transformer to a circuit 110, specifically to Device power 112. Switch S1 and switch S2 consistent with FIG. 1A are shown. The power consuming component 116 of FIG. 1F is a light emitting diode (LED) of an airfield lighting fixture. Different current and voltage values exist at different points in the loop, which are denoted I_{SEC}, V_{SEC}, I_{IN}, V_{IN}, I_{LED}, and V_{LED}, respectively.

As shown, power consuming component 116 is put in diagnostic mode by any suitable method. When in diagnostic mode performing a diagnostic operation, S2 is open and a series of settings and values are observable. For example, assuming that a response being sent by circuit 110 is that the fixture is OK, S1 is opened, which results in I_{LED} having a value of approximately 0 amperes (A), which is a DC current. V_{LED} can have a value of 0 voltage DC, as the circuit is open. Power out can equal V_{LED}*I_{LED} or 0 watts.

With regard to a sample calculation at a fixture (e.g., circuit 110) for a hypothetical scenario, a frequency conveyed from the system 100 can be at 70 Hz. With S1 and S2 open, a reasonable value for this scenario results in an I_{CCR} of 6.6 A of AC power. Assuming a resistance R of 3.30 Ohms. V_{R} equals I_{R}*R or approximately 20 volts (V). I_{R} equals I_{SEC} and I_{IN}, which equals 6.6 AAC. V_{IN} equals 0.0 VAC as shown. The numbers and examples are intended to vary from implementation to implementation, but are provided to illustrate the basic point that values are convertible, such as through conversion logic 108, and that an impedance high and low state can be detected through measurements and formula applications within the scope of one of ordinary skill in the art.

FIG. 1G shows a multifrequency signaling timing diagram consistent with the use case of FIG. 1F. As shown, communications occur while the system is placed in a diagnostic mode. While in the diagnostic mode, S2 is open. Prior to entering the diagnostic mode where communications occur, S2 was closed. Initially, S1 is closed and the CCR current is 60 Hz.

A CCR current at 70 Hz is transmitted to inquire whether the circuit 110 (e.g., an airport lighting fixture) is properly operating. This is represented in FIG. 1G by the "Fixture OK?" label shown above the 70 Hz cycles. In some embodiments, ten power line cycles are transmitted (, which are labeled "Fixture OK?") to inquire as to whether the circuit 110 (e.g., an airport lighting fixture) is properly operating. The circuit 110 or airfield lighting fixture responds affirmatively by opening S1 from a previously closed state. When this occurs, a measurement of the CCR voltage of 20 VAC is anticipated (for calculations see FIG. 1F). S1 remains closed during the 70 Hz CCR current cycles when the circuit 110 is not responding affirmatively.

The CCR current is 60 Hz for a set of cycles following the 70 Hz cycles. S1 is closed while the CCR current is 60Hz.

The CCR current is at 50 Hz to inquire whether the circuit 110 is not properly operating, which is labeled in FIG. 1G as "Fixture Not OK?". The circuit 110 opens S1 when the CCR current is at 50 Hz to indicate that "No, Fixture is Not OK." The CCR current is 60 Hz for a set of cycles following the 50 Hz cycles. S1 is closed while the CCR current is 60Hz.

As noted, the timing of the response, per the power cycle changes in frequency is important for understanding the message(s) being conveyed. An assumption with FIG. 1G is that the circuit 110 (e.g., airfield fixture device) is able to detect when received power is at 50 Hz, 60 Hz, or 70 Hz (or other frequency). Further, a preconfigured duration of each frequency is known and established between the system logic understood by instructions executed by processor 114 and by processor 104. To indicate that the circuit 110 is not OK, S1 is open during the 50 Hz cycle period as shown. Opening these switches as indicated results in a VR, VSEC, and VCCR_RET values of approximately 20 VAC, as shown. If the circuit 110 does not respond as being either OK or not OK, the signaling can repeat. If no response is received after a defined number of attempts, an assumption that the circuit 110 (or airport lighting fixture) is not properly operational can be made.

As previously noted, the actual signaling methodology or protocol is variable and can be implemented in numerous manners. Use of communication within frequency cycles at 50 and 70 Hz by selectively opening/closing S1 and S2 within designated time slots is just one example. Once any impedance high and impedance low state is able to be established and communicated (decoded) remotely by system 100, the impedance-based communication method detailed herein is being utilized.

As noted from FIG. 1G, the "message" is conveyed from circuit 110 to system 100 when the power is delivered and while the circuit is placed in a diagnostic mode. System 100 interrogates (or requests a response, as indicated by the "Fixture OK interrogation/request) of the circuit 110 by conveying a power at a frequency shifted from a default frequency at which power is provided, wherein the message is conveyed while the power is frequency shifted from the default frequency. The default frequency can be 60 Hz. When the impedance adjustor shifts between the low impedance state and the high impedance state to convey the message while the power is frequency shifted above (or higher than) the default frequency (such as being at 70 Hz) the message represents a YES response, when the power is frequency shifted below (or lower than) the default frequency (such as being at 50 Hz) the message represents a NO response. Whether a YES is associated with a higher than default frequency or a lower than default frequency is not essential, so long as an opposite one of the YES or NO response is associated with the opposing frequency shift.

The interrogation can continue until either a response is received or until a time out trigger occurs. When a time out occurs, an assumption is that the circuit 110 is not operational.

Per FIG. 1G, transmitting power at a frequency of one of 70 Hz and 50 Hz is interpreted as a request to respond to a yes-or-no interrogatory. The impedance circuitry 115 adjusts between the low impedance and the high impedance state when the power is at 70 Hz to indicate a yes response to the yes-or-no interrogatory. The impedance circuitry 115 adjusts between the low impedance and high impedance state when the power is at 50 Hz to indicate a no response to the yes-or-no interrogatory.

### PROOF OF CONCEPT

A proof of concept was performed to illustrate the feasibility of current amplitude-based interrogations of airfield lighting fixtures.

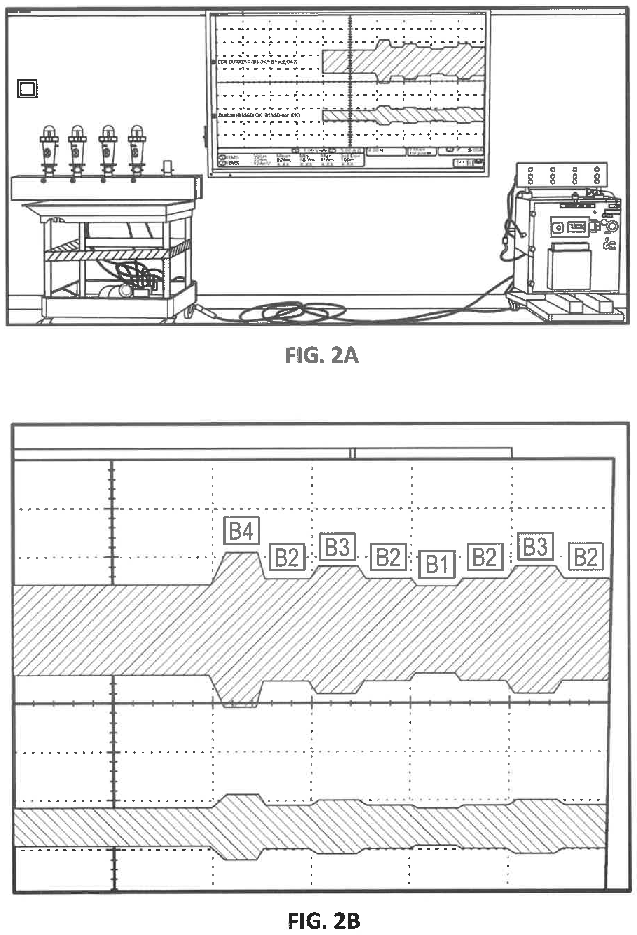

FIG. 2A shows the set-up of a proof of concept for current amplitude-based interrogations. Referring to FIG. 2A, the proof of concept was performed using L861T Taxiway Edge light fixtures (four lights total), L830 Isolation Transformers, L829 CCR with user interface showing four fixture indicator lights, and Oscilloscope display showing both current and voltage traces in real-time. Here, the Airport Lighting series circuit consists of four L861 Edge lights, connected to four isolation transformers which are subsequently connected in series to a Pro Power CCR. Each light fixture has an additional mechanical switch in series with the LED output. This switch allows the fixture to be configured in an operational state = ON or operational state = OFF. The four fixtures are numbered and by agreement will respond to commands from the CCR for status, one at a time serially.

The light fixtures can communicate using changes in impedance caused by opening and closing transistor switches within the fixture LED power supply, which causes a resistor to be in series with the fixture for a certain number of cycles of the line. When the CCR detects the response, the user interface (e.g., set of green and red indicator lights) will turn on the appropriate indicator light. In the proof of concept set-up, the indicator lights are positioned L-R to correspond the light fixture positions L-R.

FIG. 2B illustrates a sequence of commands output from the CCR during the proof of concept. Referring to FIG. 2B, CCR commands come in the form of changes in Current Amplitude. A dual-trace oscilloscope displays two labeled plots: Top trace: "CCR CURRENT (B3-OK ?; B1-not_OK?)" - displaying the current amplitude changes from the CCR; and Bottom trace: "BlueLite (B3&5Ω-OK: B1&5Ω -not_OK)" - showing the fixture response signals. The sequence of commands shown in FIG. 2B is B4, B2, B3, B2, and B1, followed by a repeat of the sequence starting from the first B2 (e.g., B2, B3, B2, B1 (not shown), ...) until all fixtures are interrogated.

Here, **B1:** corresponds to "Fixture off?" interrogation command; **B2:** corresponds to IDLE state (which can also be the default current amplitude state); **B3:** corresponds to "Fixture on?" interrogation command; and **B4:** corresponds to DIAGNOSTIC MODE entry command. There is no response yet in the bottom trace shown in the plot. In this example, power is transmitted at a current amplitude of 2.8 A, 3.4 A, 4.1 A, and 5.2 A for the different states. The CCR transmits the power at one of 2.8 A and 4.1 A when requesting the message from the circuit; and the impedance circuitry adjusts between the low impedance state and the high impedance state to convey the message when the power is at one of 2.8 A and 4.1 A. Of course, other correspondences may be used between current amplitude and signal. In addition, other configurations can be used, for example, power can be transmitted at a current amplitude of 6.6 A, 5.2 A, 4.8 A for different states, where one of 6.6 A and 4.8 A is used when requesting the response.

Each fixture can detect the current amplitude and responds back to the CCR by increasing the series circuit voltage (shown in the bottom trace). This is accomplished by inserting a 5-Ohm resistor in series with the fixture input for approximately ten cycles of the line with the opening and closing of some transistor switches mounted within the fixture LED power supply. As a result, the response shows up as a spike in the trace at the period of the particular current amplitude.

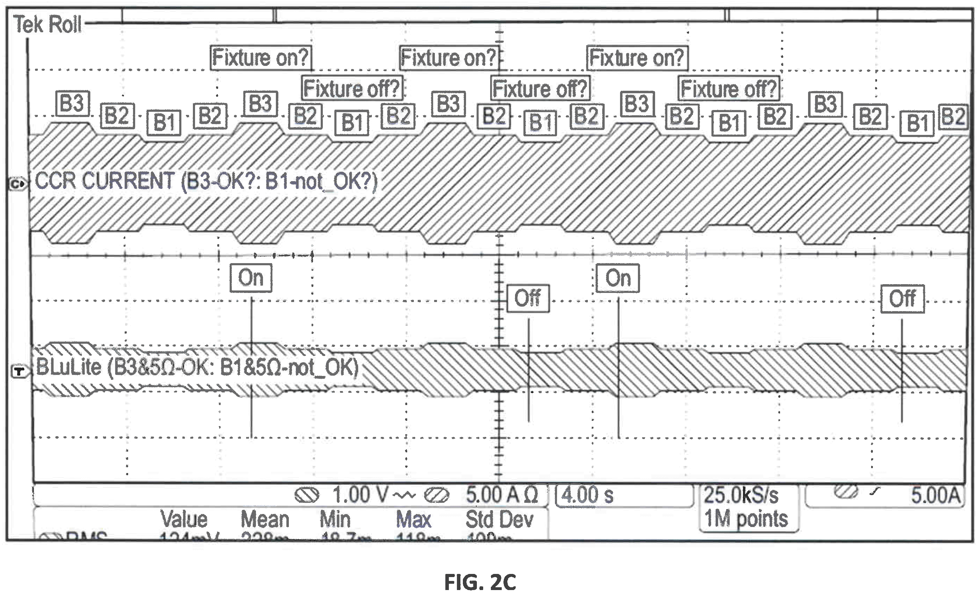

FIG. 2C illustrates an example correspondence between interrogations and responses. It should be noted that the illustrated trace of responses corresponds to the fixture lights being ON, OFF, ON, and OFF from left to right.

In the proof of concept, after the CCR detects the fixture voltage response, the CCR lights the Green indicator light for ON state or the Red indicator light for OFF state. Here, the Green/Red indicator lights, located above the CCR are connected to relays located on the CCR control board. When the CCR detects a fixture voltage response to the interrogatory corresponding to B3, it closes a relay contact on the CCR control board which subsequently lights the corresponding Green indicator light. Similarly, when the CCR detects a Fixture voltage response during B1, it closes another relay contact and lights the corresponding RED indicator light. There are two indicator lights for each fixture.

From the proof of concept, it can be seen that it is possible to provide communication between the CCR and light fixtures using existing equipment and just a firmware modification supporting the current amplitude command/voltage feedback methodology. Indeed, there is no communication over WiFi or other wireless protocols; nor is there a separate cable or wire that is used - other than the series circuit power cables.

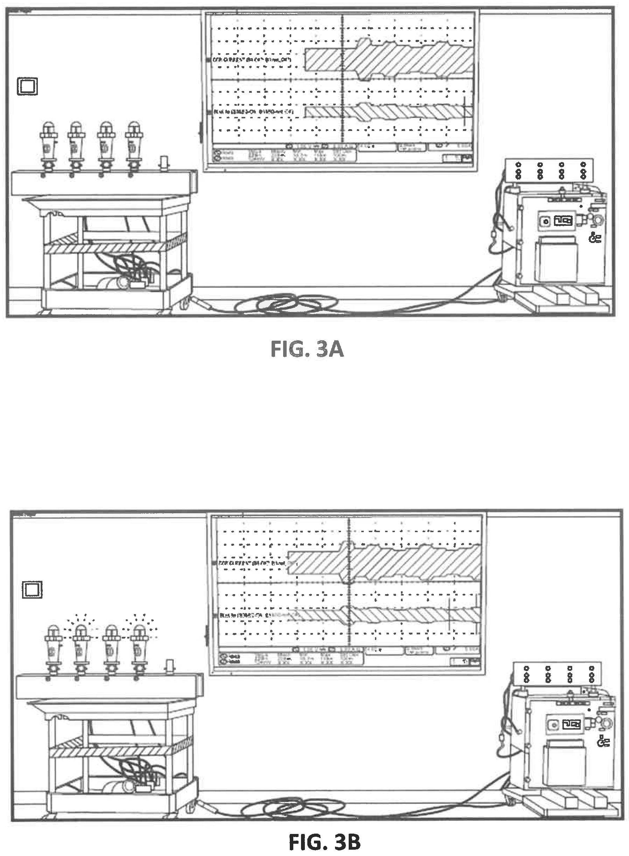

FIGs. 3A-3D illustrate the demonstration of proof of concept showing the traces and resulting indicator lights as the four light fixtures are interrogated one at a time, serially. In this demonstration, the first and third light fixture are OFF and the second and fourth light fixtures are ON.

In FIG. 3A, the first commands of Fixture ON? and Fixture OFF? are received at the first light (from left), which is OFF. The resulting responses correspond to NO and YES, and the indicator light turns red.

In FIG. 3B, the next commands of Fixture ON? and Fixture OFF? are received at the second light (from left), which is ON. The resulting responses correspond to YES and NO, and the indicator light turns green.

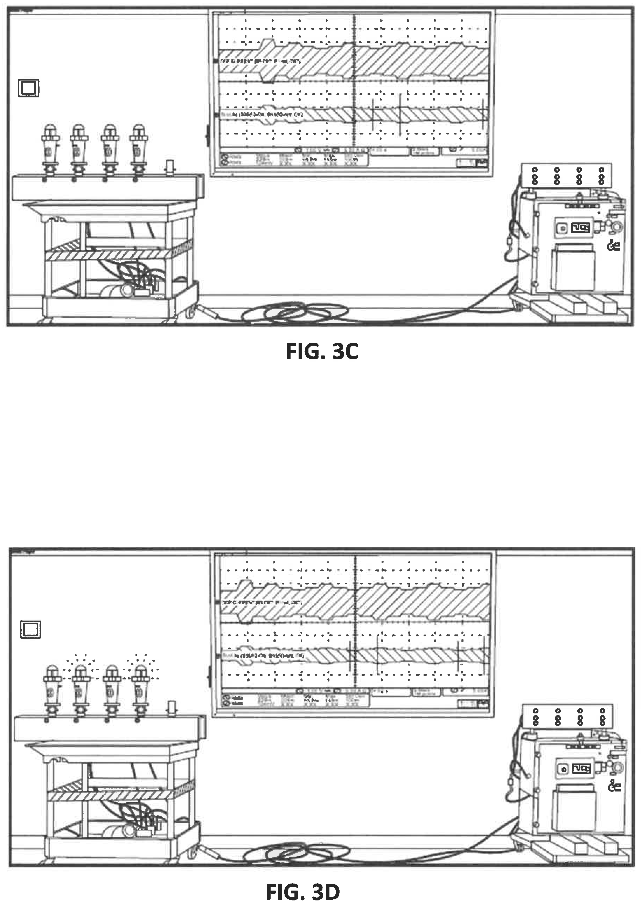

In FIG. 3C, the next commands of Fixture ON? and Fixture OFF? are received at the third light (from left), which is OFF. The resulting responses correspond to NO and YES, and the indicator light turns red.

Finally, in FIG. 3D, the next commands of Fixture ON? and Fixture OFF? are received at the fourth light (from left), which is ON. The resulting responses correspond to YES and NO, and the indicator light turns green.

### AIRFIELD LIGHTING CONTROL AND MONITORING SYSTEM (ALCMS) USE CASE

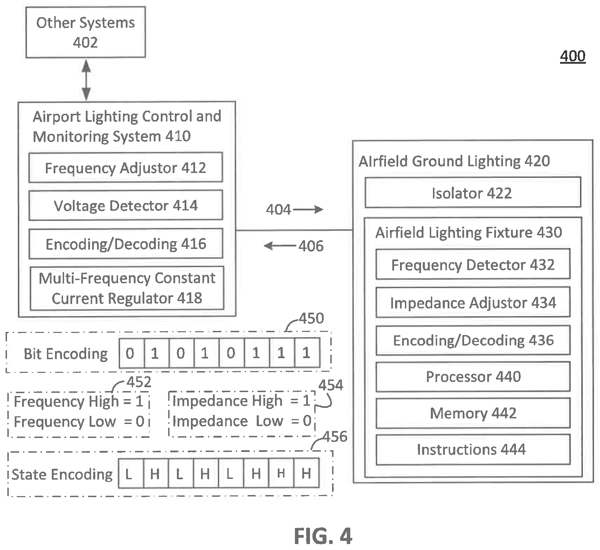

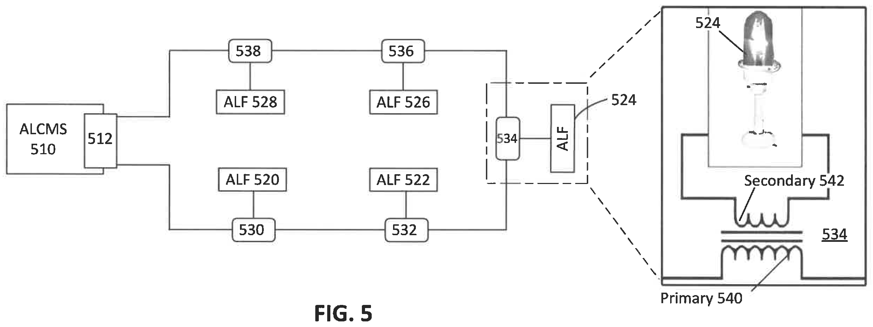

FIG. 4 and FIG. 5 present details for an airfield lighting fixture use case consistent with FIGs. 1A-1G. The airfield lighting fixture use case is significant, as impedance-based communications allow lighting fixtures to communicate back to airfield lighting and monitoring system components without reliance on a powerline modem, which adds costs and additional failure points for maintenance personnel. Additionally, the airfield example provides a strong context understandable by one of ordinary skill within which the previously described innovation is well suited.

Signaling within an ALCMS is achieved using messages encoded within power cycles of power provided to the airfield lighting fixtures from an ALCMS (See FIG. 1G). Each message can communicate an operational state or stored operational/performance information of one of the airfield lighting fixtures to the airport lighting control and monitoring system.

Airfield lighting fixtures include a light emitter (e.g., a power consuming component 116) that receives power generated by the ALCMS. The power, which uses alternating current (AC), has a sequence of power cycles. Each airfield lighting fixture includes a circuit, which is able to adjust the fixture's impedance between at least a low impedance state and a high impedance state. In this manner, a lighting fixture's circuit includes an impedance adjustor. In certain embodiments, the detection of 1-bit of information from an airfield lighting fixture will take eight to ten (8-10) power full-cycles (e.g., 0.13 to 0.167 seconds) to reliably transmit/receive signals. In certain embodiments, half cycles can be used, which can cut the 1-bit time in half.

The ALCMS controls and monitors the airfield lighting fixture (e.g., circuit 110), where a constant current regulator (CCR) is the source of the external power received by circuit 110. Typically, the ALCMS piggybacks onto the Airfield lighting circuit consisting of a power generator (CCR) cable, isolation transformers, light fixtures. An ALCMS adds computer, software, communication to power generator, modems, etc. The ALCMS system always includes the Airfield lighting circuit. However, an Airfield lighting circuit can exist without an ALCMS. In certain embodiments, the smart CCR can directly transmit/receive information to/from the light fixture without the need for an ALCMS. This information may be transmitted to the ALCMS computer by a number of methods (e.g. RS232 cable, RS485 cable, Ethernet Cable, optical fiber, Wi-Fi radio, etc.

To elaborate, each airfield lighting fixture includes a power port 113 configured to receive power from the airport lighting control and monitoring system. Often an isolation transformer is used for safety to isolate individual airfield lighting fixtures from the loop for maintenance. The light emitter is connected to the power port as are other electronic components of the airfield lighting fixtures. In certain embodiments, the airfield lighting fixture utilizes light emitting diode (LED) technologies and therefore includes a set of one or more light emitting diodes, as a power efficient means for illumination that minimizes heat loss.

The airfield lighting fixture can include a processor and a memory, where information specific to the airfield lighting fixture including operational or performance information is stored with the memory. LED-type airfield lighting fixtures often include memories storing such operational or performance data, where information conveyed within messages encoded within the power can be based on the stored data. Circuitry connected to the power port can adjust between a low impedance state and a high impedance state, which increases or decreases resistance at the airfield lighting fixture. The processor connected to the impedance adjustor executes instructions to represent a message as a bit sequence of bits, each having a zero bit value or a one bit value. Schemas for information encoding can vary (see FIG. 1G). The executing instructions cause the impedance adjustor to be triggered to perform a sequence of adjustments corresponding to the bit sequence, within which a zero bit value and a one bit value correspond to different ones of the low impedance state and the high impedance state. The adjustments are made such that each set of the power cycles represents one of the bits of the bit sequence. As mentioned, for reliability of transmission/reception of signals eight full power cycles may be needed to convey 1-bit, although half cycles can be used to cut transmission/reception time in half.

The set of power cycles can have a value of one or more (e.g., eight full power cycles can constitute a set). When one power cycle is used for the set, a byte (e.g., eight bits) of information can be conveyed within eight power cycles (although practical considerations like loop noise result in multiple power cycle use being more typical). When the set of power cycles includes at least two power cycles, each bit in the bit sequence as encoded within the set of power cycles is repeated. For example, when a set of two power cycles is used for the set, one byte of information spans sixteen power cycles, where each bit value of the bit is repeated twice. When a set is defined as eight power cycles, each bit in the bit sequence is repeated eight times. Repeating bit values over more than one power cycle can improve transmission accuracy and reliability.

From a perspective of the ALCMS, the ALCMS includes a power generator (e.g., the CCR) configured to generate power having a sequence of power cycles. The power is conveyed over the loop connecting the ALCMS to the airfield lighting fixture. A voltage detector connected to the power generator includes circuitry to detect different voltage states on a per cycle basis for the power. In certain embodiments, the voltage detector averages the loop voltage over a number of cycles in the line (e.g., ten). Methods generally either rectify and compute the DC average or compute RMS average. The DC or RMS average is then compared with a trip value to signal a logical "1" or "0".

The voltage detector is of sufficient sensitivity to detect different voltage states resulting from the airfield lighting fixture changing from a low impedance state to a high impedance state. A processor connected to the voltage detector executes instructions to detect plurality of sets of different voltage states occurring within a set of the power cycles. The processor executing instructions translates each set of the plurality of sets of different voltage states into a bit value such that the plurality of the sets of different voltage states corresponds to a sequence of bits. In certain embodiments, the voltage values of the different voltage states endure for at least two power cycles, whereby each bit of the sequence of bits as encoded within the set of power cycles is repeated. The sequence of bits represents a message conveyed from the airfield lighting fixture to the ALCMS over the loop. For each bit of the sequence of bits, a zero bit value and a one bit value correspond to different voltage values detected by the voltage detector. The different voltage values correspond to the airfield lighting fixture being in the low impedance state and being in the high impedance state.

For more context, per the signaling method described herein, airfield lighting fixtures communicate by adjusting impedance states. The impedance adjustments of the airfield lighting fixtures result in different voltage states within a loop, which is detected by the ALCMS (e.g., specifically by a CCR, such as multi-frequency constant current regulator 418). Each airfield lighting fixture uses an impedance high state to represent a bit value (e.g., a binary "1") and an impedance low state to represent a different bit value (e.g., a binary "0"). A set of one or more power cycles correspond to different bits in a bit stream. In embodiments, two or more power cycles can be used for each bit. Checksums and other transmission techniques and protocols can be implemented for the impedance encoded signaling system. Impedance encoding implies a corresponding detectable voltage state change is occurring within the loop.

The novel signaling is largely consistent with Federal Aviation Administration (FAA) publishes advisory circular (AC) 150/5345-56B titled "Specification for L-890 Airport Lighting Control and Monitoring System (ALCMS)" that details requirements of an airport lighting control and monitoring system. AC 150/5345-56B provides airfield lighting fixtures convey monitoring signals back to the airport lighting control and monitoring system as an available and recommended option.

The airfield lighting fixture to ALCMS communication can be part of a bidirectional signaling system, where the ALCMS includes a multi-frequency constant current regulator 418 that uses frequency modulation to send messages from the airport lighting control and monitoring system to the airfield lighting fixture. In another scenario, a bidirectional signaling system can use amplitude modulation to send messages from the ALCMS to airfield lighting fixtures. In certain embodiments, the novel signaling and related circuits can be implemented through a software/firmware upgrading of the airfield lighting fixtures, which minimizes installation and maintenance costs. That is, some airfield lighting fixtures include an ability to effectuate impedance adjustments and the ALCMS includes an ability to detect different voltage states. Similarly, some airfield lighting fixtures can detect frequency changes, which the ALCMS can effectuate. In some embodiments, the disclosed signaling method occurs point-to-point between the ALCMS and the airfield lighting fixtures without requiring significant additional communication hardware, which lowers maintenance and installation costs for airfield lighting monitoring and control.

To elaborate on the frequency encoding for communicating, a frequency adjustor of the airport lighting control and monitoring system is connected to the power generator comprising circuitry to adjust between a low frequency state and a high frequency state. The frequency adjustor can be a component of a multi-frequency constant current regulator 418 of the airport lighting control and monitoring system. The power can be transmitted from the airport lighting control and monitoring system to the airfield lighting fixture at a frequency of 60 Hz by default, wherein the high frequency state is one resulting from a frequency shift above 60 Hz, wherein the low frequency state is one resulting from a frequency shift below 60 Hz. (See FIG. 1G) Examples of the frequencies that may be used include, but are not limited to, 50 Hz, 55 Hz, 60 Hz, 65 Hz, and 70 Hz.

FIG. 4 illustrates a system 400 that communicates over a power conduct between airfield lighting fixtures 430 and an ALCMS 410.

ALCMS 410 is a system that controls and monitors airfield lighting systems, including runway, taxiway, approach, apron, and stop bar lighting. ALCMS 410 can turn lights (including light emitters of airfield lighting fixture 430) on and off individually or in groups, control the intensity of specific lights (including airfield lighting fixture 430), monitor alarms for airfield lighting equipment, log operator activations, and includes a standardized control panel. In certain embodiments and per AC 150/5345-56B, the ALCMS 410 includes an air traffic control (ATC) human machine interface (HMI), an ATC computer, a remote HMI, an electrical vault HMI, a vault communications network, and specific control and monitoring equipment. The disclosed signaling protocol is designed to interoperate within the unique requirements of ALCMS 410.

Airport ground lighting (AGL) 420 is a system of lights and accessories, including airfield lighting fixtures 430, installed on the ground at an airport to help pilots and other users navigate. Airport ground lighting 420 is essential for safe aircraft operations, especially in low visibility conditions like bad weather or at night. Airport ground lighting 420 helps pilots maintain proper alignment, avoid runway incursions, and navigate safely on the ground.

The path, including the power conduct between the ALCMS 410 and through the airport ground lighting 420 can be considered a loop. The loop can be a serial circuit that includes a set of airfield lighting fixtures and the airport lighting control and monitoring system. Often, the loop will extend for one or more miles, as the airfield lighting fixtures are the airport's runway and taxiway lights. Further, power over the loop is often provided by a constant current regulator which helps each of the airfield lighting fixtures maintain a constant illumination level.

Given assured constant current, impedance variations (e.g., the low impedance state and the high impedance state of an airfield lighting fixture 430) in the serial circuit (e.g., the loop) translate directly into voltage variations, per Ohm's law. A voltage detector 414 of the ALCMS 410 (which may be a component of CCR 418) is of sufficient sensitivity to detect the voltage variations (e.g., the different voltage states) resulting from one or more airfield lighting fixtures changing from a low impedance state to a high impedance state or from the high impedance state to a low impedance state.

Each airfield lighting fixture 430 includes a circuit, which is able to adjust the fixture's impedance between at least a low impedance state and a high impedance state. For example, an impedance adjustor 434 can be used to adjust resistance values at a fixture level (e.g., circuitry to adjust between a low impedance state and a high impedance state). A processor 440 connected to the impedance adjustor 434 executes instructions to convey a message to the airport lighting control and monitoring system over the loop by encoding the message within a sequence of bits, each having a bit value of zero or one. Within the encoding, different bit values are represented by the low impedance state and the high impedance state. This sequence of bits can be referred to as an impedance encoded message 406.

Impedance encoded messages 406 (e.g., ones where different ones of a zero-bit value and a one-bit value correspond to the low impedance state to the high impedance state per set of power cycles) are conveyed over the power line (e.g., the loop) from the airfield lighting fixture 430 to the ALCMS 410. The ALCMS 410 uses a voltage detector 414 to detect changes in voltage state to decode message 406.

In some embodiments, the ALCMS 410 includes a processor executing instructions to detect plurality of sets of different voltage states occurring within a set of the power cycles. The processor executing the instructions translates each set of the plurality of sets of different voltage states into a bit value such that the plurality of the sets of different voltage states corresponds to a sequence of bits. The sequence of bits represents a message 406 conveyed from the airfield lighting fixture 430 to the airport light control and ALCMS 410 over the loop. For each bit of the sequence of bits, a zero bit value and a one bit value correspond to different voltage values detected by the voltage detector 414, where the different voltage values correspond to the airfield lighting fixture 430 being in the low impedance state and being in the high impedance state. The voltage detector 414 is of sufficient sensitivity to detect different voltage states resulting from the airfield lighting fixture 430 changing from a low impedance state to a high impedance state.

Control signals can be sent from the ALCMS 410 to a lighting fixture 430 in a similar manner. In certain embodiments, ALCMS 410 includes a frequency adjustor 412 able to frequency shift a sequence of power cycles. Frequency encoded control messages 404 are conveyed over the power line (e.g., the loop) from the ALCMS 410 to the airfield lighting fixture 430.

A frequency detector 432 within the airfield lighting fixture 430 includes circuitry to detect the frequency shifts (e.g., whether the power was transmitted at a low frequency state or a high frequency state) and to decode the control message 404.

Within each message 404, 406 detectable and controllable characteristics of the power signal extend from at least a low to a high state.

In some cases, a key 452 for encoding/decoding based on frequency can be used that equates a high frequency state to a bit value of 1 and a low frequency state to a bit value of 0. Similarly, a key 454 for encoding/decoding based on impedance can equate a high impedance state to a bit value of 1 and a low impedance state to a bit value of 0. Alternatively, each/either key 452, 454 could equate the high state to a bit value of 0 and the low state to a bit value of 1.

As an illustrative example, an eight-bit sample message 450 with bit encoding of "01010111" is able to be expressed as a state encoded form 456 as "LHLHLHHH", where L represents the low state and H represents the high state. The encoding/decoding scheme used in system 400 is handled by encoding/decoding component 416 and by encoding/decoding component 436. The encoding/decoding example shown in FIG. 4 through message 450, key 452, key 454, and state encoded form 456 is sufficient for messaging as established by FAA regulations. In some embodiments, bit values can be intentionally repeated within multiple power cycles. For example, message 450 can alternatively be expressed as a state encoded form 456 as "LLHHLLHHLLHHHHHH", where each bit value is repeated once in form 456. In another example, message 450 can be expressed as a state encoded form 456 as "LLLLHHHHLLLLHHHHLLLLHHHHHHHHHHHH", where four consecutive power cycles encode each bit value. Having more than one power cycle represent a bit value ensures communication accuracy. Components 416 and 436 can utilize any of a variety of encoding/decoding mechanisms and protocols and are not limited to the simple conceptual example presented herein.

Each airfield lighting fixture 430 can include a circuit with processor 440, memory 442, and a set of instructions 444. Instructions 444 include software and/or firmware stored in memory 442 and able to be executed by the processor 440. In embodiments, functions performed by frequency detector 432, impedance adjustor 434, and/or encoding/decoding component 436 can be implemented by instructions 444. In embodiments, instructions 444 can be updated, such as through a software or firmware upgrade.

In some embodiments of system 400, consistent output current is maintained regardless of changes to input voltage or load resistance using a constant current regulator. A constant current regulator is important, especially for LED lighting to ensure consistent brightness even with varying power supply voltage. Multi-frequency constant current regulator 418 provides constant output current across multiple frequencies. By default, and consistent with FAA standards, a frequency for power over the loop can be approximately 60 Hz. Multi-frequency constant current regulator 418 can operate around the 60 Hz range, such as operating between 100 Hz and 20 Hz or 60Hz plus/minus 40 Hz. In some embodiments, multi-frequency constant current regulator 418 can generate a high frequency state of 70 Hz and a low frequency state of 50 Hz. Generally, the high frequency state is one resulting from a frequency shift above 60 Hz, wherein the low frequency state is one resulting from a frequency shift below 60 Hz. In certain embodiments, functionality detailed for frequency adjustor 412 can be integrated within the multi-frequency constant current regulator 418.

A typical configuration (e.g., one of an FAA approved setup, for example) of a lighting circuit includes an isolator 422 for each airfield lighting fixture 430, which is a safety measure used when airfield lighting fixture 430 is serviced. Isolator 422 separates a segment of an alternating current (AC) circuit from the power source (e.g., ALCMS 410).

In certain embodiments, other systems 402 interface with the ALCMS 410, which include air traffic control (ATC) computers, a Surface Movement Guidance and Control System (SMGCS), navigational aid systems, airport power systems and backups, and the like. Further, specialized lighting systems such as Approach Lighting Systems (ALS), Precision Approach Path Indicator (PAPI), Visual Approach Slope Indicator (VASI), and Runway End Identifier Light (REIL)), and runway guard lights are often handled separately from airport ground lighting 420 and have their own requirements and interfaces.

FIG. 5 illustrates a serial circuit (e.g., loop) permitting signaling between a set of airfield lighting fixtures (ALFs) 520, 522, 524, 526, 528 and airport lighting control and monitoring system 510 via a power line (e.g., loop). The airport lighting control and monitoring system 510 can communicate with the airfield lighting fixtures 520, 522, 524, 526, 528 using frequency based signaling. The arrangement of FIG. 5 is one contemplated arrangement consistent with a system 400. Although a set of five airfield lighting fixtures are illustrated, serial circuits can have hundreds of airfield lighting fixtures in contemplated use cases.

As shown, each airfield lighting fixture 520, 522, 524, 526, and 528 is electrically connected to an isolation transformer 530, 532, 534, 536, 538 for enhanced safety.

In one embodiment, the impedance adjustor 434 adjusts to a high impedance state by disabling a power supply of an input to the airfield lighting fixture, where the power supply is connected to a circuit of the airfield lighting fixture. This allows the input voltage of the airfield lighting fixture 524 to reach a saturation voltage of the isolation transformer 534. The saturation voltage at secondary 542 of isolation transformer 534 is reflected to primary 540 and is ultimately detected by the voltage detector 414, which may be a component of the multi-frequency constant current regulator 418.

In another embodiment, a relay contact can be wired in series with the isolation transformer secondary 542 and to an input port of airfield lighting fixture 524. Opening the relay contact will allow the isolation transformer 534 to saturate to achieve the impedance high state. Thus, the impedance adjustor 434 adjusts from the impedance low state to the impedance high state by opening the relay contact. Other use cases for achieving the low impedance state and the high impedance state are contemplated.

In certain embodiments, the communication of digitally encoded messages between the airport lighting control and monitoring system 510 and airfield lighting fixtures 520, 522, 524, 526, and 528 occur when airport lighting control and monitoring system 510 is placed in a diagnostic or test mode. In its default mode, a multi-frequency constant current regulator 512 of the airport lighting control and monitoring system 510 can convey power at a constant current of 60 Hz. In the diagnostic mode, frequency shifted current having a high frequency state and a low frequency state can be generated by the multi-frequency constant current regulator. In one embodiment, the high frequency state can be a frequency above 60 Hz, such as 70 Hz. The low frequency state can be a frequency below 60 Hz, such as 50 Hz.

When in diagnostic mode, airfield lighting fixtures 520, 522, 524, 526, and 528 can be addressed individually. This can occur through airport lighting control and monitoring system 510 conveying an airfield lighting fixture 520, 522, 524, 526, and 528 identifier within an outgoing message, which is responded to only from the identified airfield lighting fixture. Other airfield lighting fixtures in the circuit can be disabled or placed in a passive, off state, for a period sufficient to permit the addressed airfield lighting fixture to respond. Thus, airport lighting control and monitoring system 510 is able to isolate specific airfield lighting fixtures in a loop and be assured that any digitally encoded messages discerned from different voltage states originate from that specific airfield lighting fixture.

In other embodiments, the airport lighting control and monitoring system 510 can issue a global digital message to which all airfield lighting fixtures 520, 522, 524, 526, and 528 respond. In such a case, a response window can be time segmented, where each airfield lighting fixture 520, 522, 524, 526, and 528 is assigned a response window. For example, a fifty second response window can include ten second sub-windows for each airfield lighting fixture 520, 522, 524, 526, and 528. So in the first sub-window, Airfield lighting fixture 520 responds by adjusting its impedance state appropriately, and Airfield lighting fixture 522, 524, 526, and 528 are in a passive state during this window. Airfield lighting fixture 522 can respond within the second sub-window, and so forth.

In still another use case, a set of airfield lighting fixtures 520, 522, 524, 526, and 528 can concurrently relay a digital message to airport lighting control and monitoring system 510. For example, the ALCMS 410 can query all airfield lighting fixtures 520, 522, 524, 526, and 528 to respond at the same time with a high impedance state if operating properly and to otherwise be in a default low state. If all airfield lighting fixtures 520, 522, 524, 526, and 528 are functioning properly, a voltage state consistent with all five airfield lighting fixtures 520, 522, 524, 526, and 528 being in a high impedance state is detected at airport lighting control and monitoring system 510, then it has been determined that all of the airfield lighting fixtures are functioning properly. If a voltage state (High or low) indicates that four out of five of the airfield lighting fixtures are in the high impedance state, then one is malfunctioning or has not responded.

In another communication example, an airfield lighting fixture 520 can be commanded by a control message to provide a status of either FAULT or OK. By a pre-arranged protocol, airfield lighting fixture 520 can assume the multi-frequency constant current regulator 512 to issue a string of ten 50 Hz power line cycles, followed by ten 60 Hz power line cycles and finally finishing with ten 70 Hz power line cycles. Airfield lighting fixture 520 can signal FAULT by raising its impedance to a high state for power cycles 4-7, when the multi-frequency constant current regulator 512 is operating at 50 Hz and lowering its impedance to low state for power cycles 8-30. Similarly, the airfield lighting fixture 520 can be configured to indicate an OK status by raising its impedance to the HIGH state during cycles 24-27. The above example shows that a direct translation to bit values is not needed, so long as a pre-arranged protocol allows signaling to occur, such that a message encoded by encoding/decoding component 436 is able to be decoded by encoding/decoding component 416.

Any signaling protocol or signaling scheme consistent with the disclosure can be used herein, where the above examples are used to conceptually illustrate targeted and group responses.

Each airfield lighting fixture 520, 522, 524, 526, and 528 does not need to have a conventional transmitting capability per this disclosure to digitally encode information that airport lighting control and monitoring system 510 can decode. Instead of generating a signal that includes encoded information, each airfield lighting fixture 520, 522, 524, 526, and 528 performs internal impedance adjustments to increase resistance against power generated by ALCMS 410. Airport lighting control and monitoring system 510 is able to detect voltage states resulting from one or more airfield lighting fixtures transitioning to/from low impedance states and high impedance states using voltage detector 414.

In embodiments, each airfield lighting fixture 520, 522, 524, 526, and 528 is a device having its own processor 440, memory 442, and executable instructions 444. In addition to operations described with respect to FIG. 4, the instructions 444 can further cause the processor to internally record (e.g., in memory 442) operational information, such as the number of hours the airfield lighting fixture has been used, a date of first use, a version number unique to the airfield lighting fixture, specifications of airfield lighting fixture capabilities, and the like. Any of this information can be queried by airport lighting control and monitoring system 510 to receive a response message through the bidirectional signaling schema described herein. In embodiments, firmware/software of each airfield lighting fixture 520, 522, 524, 526, and/or 528 can be remotely updated, such as through commands and updates issued by airport lighting control and monitoring system 510.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

## Claims

1. A circuit configured to convey information over a power line, the circuit comprising:
an impedance adjustor configured to selectively change an impedance of the circuit during one or more cycles of an alternating current power signal;
wherein the selective change in impedance causes a variation in voltage on the power line detectable by a remote system; and
wherein the variation in voltage corresponds to a message conveyed by the circuit.

2. The circuit of claim 1, wherein the circuit is an airfield lighting fixture.

3. The circuit of claim 1, wherein the conveyed information represents an operational state.

4. The circuit of claim 1, further comprising a memory storing operational or performance data, wherein the conveyed information is based on the stored data.

5. The circuit of claim 1, further comprising a frequency detector configured to detect a change in frequency of the alternating current power signal.

6. The circuit of claim 5, wherein the circuit conveys information in response to detecting the change in frequency.

7. The circuit of claim 6, wherein different frequencies correspond to different interrogation commands.

8. The circuit of claim 1, further comprising a current amplitude detector configured to detect a current amplitude of the alternating current power signal.

9. The circuit of claim 8, wherein the circuit conveys information in response to detecting a change in the current amplitude.

10. The circuit of claim 9, wherein the circuit conveys information while operating in a diagnostic mode triggered by the change in current amplitude.

11. A system for detecting information conveyed over a power line, the system comprising:
a power source configured to supply an alternating current signal to a circuit; a voltage detector configured to detect a variation in voltage on the power line caused by a change in impedance of the circuit; and
a controller configured to determine a message based on the detected variation in voltage.

12. The system of claim 11, wherein the controller is configured to translate the variation in voltage into a sequence of bits.

13. The system of claim 11, wherein the controller is configured to adjust a current amplitude of the alternating current signal to request information from the circuit.

14. The system of claim 11, wherein the system implements a multifrequency constant current regulator.

15. An airfield lighting fixture configured to communicate over a power line, the fixture comprising:
a lighting element; and
an impedance adjustor configured to selectively change an impedance of the fixture to convey information via a variation in voltage on the power line.
